# EUROPÄISCHE PATENTSCHRIFT

(11) **EP 3 179 638 B1**
(45) Veröffentlichungstag und Bekanntmachung des Hinweises auf die Patenterteilung: **12.02.2020**
(21) Anmeldenummer: 16198312.7
(22) Anmeldetag: 11.11.2016
(51) Int. Cl.: H04B 5/00, G01D 5/241, G01B 7/30

(54) **VORRICHTUNG ZUR KONTAKTLOSEN ÜBERTRAGUNG VON DATEN UND ZUR ERMITTLUNG EINER WINKELÄNDERUNG ZWISCHEN ZWEI SICH RELATIV ZUEINANDER BEWEGENDEN GEGENSTÄNDEN**
DEVICE FOR THE CONTACTLESS TRANSMISSION OF DATA AND FOR DETERMINING ONE CHANGE IN AN ANGLE BETWEEN TWO OBJECTS MOVING RELATIVE TO EACH OTHER
DISPOSITIF DE TRANSMISSION SANS CONTACT DE DONNEES ET DESTINÉ À DÉTERMINER LA MODIFICATION ANGULAIRE ENTRE DEUX OBJETS SE DEPLAÇANT L'UN PAR RAPPORT À L'AUTRE

(30) Priorität: 09.12.2015 DE 102015121432
(43) Veröffentlichungstag der Anmeldung: 14.06.2017
(73) Patentinhaber: SICK AG, 79183 Waldkirch/Breisgau (DE)
(72) Erfinder: SCHMITZ, Stephan, 79108 Freiburg (DE); KUFNER, Martin, 79215 Elzach (DE)
(74) Vertreter: Manitz Finsterwald Patent- und Rechtsanwaltspartnerschaft mbB

(56) Entgegenhaltungen:
- WO-A1-2012/041554
- DE-A1- 4 120 650
- DE-A1-102009 044 618
- US-A- 4 851 835
- US-A- 5 598 153

## Beschreibung

Die vorliegende Erfindung betrifft einen Laserscanner mit einer Vorrichtung zur kontaktlosen Übertragung von Daten und zur Ermittlung einer Winkeländerung, wobei der Laserscanner einen, relativ um eine Rotationsachse drehbaren, einen ersten Gegenstand bildenden Sensorkopf und eine einen zweiten Gegenstand bildende Versorgungseinheit umfasst. Bei der Vorrichtung zur kontaktlosen Übertragung von Daten und zur Ermittlung einer Winkeländerung bzw. eines Winkels ist an dem ersten Gegenstand ein bevorzugt scheiben- oder ringscheibenförmiger erster Elektrodenträger vorgesehen, der eine erste Elektrode umfasst, und ist an dem zweiten Gegenstand ein bevorzugt scheiben- oder ringscheibenförmiger zweiter Elektrodenträger vorgesehen, der eine zweite Elektrode umfasst. Dabei stehen sich der erste und der zweite Elektrodenträger bezüglich der Rotationsachse axial beabstandet gegenüber und die erste und die zweite Elektrode sind derart angeordnet, dass eine Datenübertragung durch elektrische Kopplung zwischen der ersten und der zweiten Elektrode möglich ist.

Bei sich relativ zueinander drehenden Gegenständen ist es oftmals notwendig, dass Daten zwischen den zwei zueinander bewegbaren Gegenständen übertragen werden. So können Eingaben an einem Lenkrad, wie beispielsweise das Drücken der Hupe oder sonstiger Eingaben zur Änderung von Fahrzeugfunktionen, zwischen dem drehbaren Lenkrad und einer Bordelektronik des Kraftfahrzeugs übermittelt werden.

Eine weitere Anwendung findet sich z.B. bei entsprechenden Ausgestaltungen von Laserscannern zur Überwachung einer Umgebung. Datensignale werden hier beispielsweise zwischen einem sich drehenden Sensorkopf und einer feststehenden Auswerte- und Versorgungseinheit ausgetauscht.

Oftmals kann es erwünscht sein, dass neben der Datenübertragung eine Ermittlung der relativen Drehposition des ersten Gegenstands zu dem zweiten Gegenstand möglich ist. Eine solche Ermittlung der Drehposition erfolgt üblicherweise mittels eines Encoders, der beispielsweise auf einem optischen oder magnetischen Prinzip basiert. Encoder benötigen allerdings zusätzliche Komponenten und erhöhen damit die Komplexität und den Herstellungsaufwand für eine solche Vorrichtung.

Eine Vorrichtung, welche mittels verschiedener Anregesignale eine Winkelstellung ermittelt ist aus der DE 10 2009 044 618 A1 bekannt. Gemäß der DE 10 2009 044 618 A1 werden Anregesignale verschiedener Polaritäten in verschiedene Gruppen von Anregeelektroden eingeprägt, wobei die Anregesignale von einer einzelnen Empfangselektrode empfangen werden.

Die DE 41 20 650 A1 beschreibt die kontaktlose Datenübertragung zwischen einem Lenkrad und einem Fahrzeug mittels eines Kondensators.

Aus der US 4,851,835 ist eine Winkelmessung mittels zweier Statoren und eines dazwischenliegenden Rotors bekannt, wobei Statoren und Rotor kapazitiv gekoppelt sind.

Es ist die der Erfindung zugrundeliegende Aufgabe, einen kompakten Laserscanner anzugeben.

Diese Aufgabe wird mit einem Laserscanner mit den Merkmalen des Anspruchs 1 gelöst. Unteransprüche sind auf bevorzugte Ausgestaltungen gerichtet. Ein entsprechendes Verfahren ist in Anspruch 14 angegeben. Während in dieser Beschreibung mehrere Ausführungsformen und/oder Beispiele offenbart wurden, ist der Gegenstand, für den Schutz angestrebt wird, durch die beigefügten Ansprüche definiert. In der Beschreibung erwähnte Ausführungsformen und/oder Beispiele, die nicht in den Schutzbereich der Ansprüche fallen, sind zum Verständnis der Erfindung nützlich.

Der erfindungsgemäße Laserscanner zeichnet sich unter anderem dadurch aus, dass sich die Stärke der elektrischen Kopplung entlang der umfangsmäßigen Erstreckung der ersten und der zweiten Elektrode verändert. Bei dem erfindungsgemäßen Laserscanner ist eine Steuereinheit vorgesehen, die ausgebildet ist, ein Signal von der ersten Elektrode an die zweite Elektrode zu übertragen, welches bevorzugt Nutzdaten enthält. Zudem ist eine Auswerteeinheit vorgesehen, die bevorzugt ausgebildet ist, die Nutzdaten zu empfangen. Die Auswerteeinheit ist eingerichtet, eine Signalstärke des empfangenen Signals separat an zumindest zwei Abschnitten der zweiten Elektrode zu bestimmen und auszuwerten, um eine Winkeländerung zwischen dem ersten und dem zweiten Gegenstand zu ermitteln.

Der Begriff der "umfangsmäßigen Erstreckung" der Elektroden ist hier als Erstreckung entlang einer Linie um die Achse der relativen Drehung der beiden Gegenstände zu verstehen.

Mit dem erfindungsgemäßen Laserscanner kann es zugleich auch möglich sein, Nutzdaten zwischen der ersten und der zweiten Elektrode zu übertragen, wobei es sich bei den Nutzdaten beispielsweise um Steuerbefehle, Mess- oder Sensordaten und dergleichen handeln kann.

Der Erfindung liegt die Erkenntnis zugrunde, dass mittels einer unterschiedlich starken elektrischen Kopplung entlang der Erstreckung der ersten und der zweiten Elektrode das zwischen den Elektroden übertragene Signal bei einer Rotation der Gegenstände in seiner Stärke schwankt. Anhand der Schwankung bzw. Veränderung der Signalstärke kann somit auf eine Winkeländerung rückgeschlossen werden. Dazu muss die Kopplungsstärke in zumindest einer Relativposition, d.h. in zumindest einer vorbestimmten Drehposition, verändert sein.

Von besonderem Vorteil ist bei der Erfindung, dass für die Ermittlung der Winkelstellung auf die ohnehin zur Datenübertragung verwendbaren Elektrodenträger zurückgegriffen wird. Folglich sind keine zusätzlichen Komponenten zur Winkelmessung erforderlich. Der erfindungsgemäße Laserscanner kann daher besonders einfach und damit wirtschaftlich herstellbar sein.

Bevorzugt sind die Elektrodenträger derart ausgebildet, dass sich die Stärke der elektrischen Kopplung entlang der umfangsmäßigen Erstreckung der ersten und der zweiten Elektrode abschnittsweise verändert, wobei zumindest zwei der so gebildeten Abschnitte eine unterschiedliche Länge aufweisen.

Beispielsweise kann die unterschiedlich starke elektrische Kopplung dadurch erreicht werden, dass sich die Form zumindest einer der Elektroden entlang ihrer Erstreckung in Umfangsrichtung verändert. Eine der Elektroden kann hierfür bereichsweise z.B. verbreitert oder verdickt ausgeführt sein.

Die unterschiedliche Kopplungsstärke kann alternativ oder zusätzlich durch das Aufbringen verschiedener Dielektrika, das Vorsehen von zusätzlichen Abschirmungen, die Verwendung einer dreidimensionalen Form mit Abschnitten mit geringerem Abstand zwischen den Elektroden und/oder durch die Benutzung einer Polygonform für die Elektroden verstärkt oder erzeugt werden.

Bevorzugt weist der erste Elektrodenträger in Umfangsrichtung abwechselnde Abschnitte mit verbreiterter und anschließend verjüngter erster Elektrode auf, wobei zumindest zwei Abschnitte eine unterschiedliche Länge aufweisen. Dies bedeutet, dass zumindest zwei Abschnitte der ersten Elektrode bzw. des ersten Elektrodenträgers, die zur Erzeugung der unterschiedlichen Kopplungsstärke dienen, in Umfangsrichtung gesehen unterschiedlich lang sind. Weiter bevorzugt umfasst auch der zweite Elektrodenträger in Umfangsrichtung abwechselnde Abschnitte mit verbreiterter und anschließend verjüngter zweiter Elektrode.

Mit einer Ausführungsform, bei der der eine Elektrodenträger oder beide Elektrodenträger in Umfangsrichtung Abschnitte mit verbreiterter und anschließend verjüngter Elektrode aufweisen, lässt es sich auf besonders einfache herstellbare und präzise Weise realisieren, dass die elektrische Kopplung entlang der Umfangsrichtung variiert. Die elektrische Kopplung kann auf diese Weise im Bereich der verbreiterten Abschnitte größer sein, als im Bereich der verjüngten Abschnitte. Aufgrund der - in Umfangsrichtung gesehen - unterschiedlichen Länge der verbreiterten und verjüngten Abschnitte der ersten Elektrode ist es möglich, dass die elektrische Kopplung zwischen der ersten und der zweiten Elektrode außerdem dort besonders stark ist, wo ein besonders langer verbreiterter Abschnitt der ersten Elektrode vorliegt. Die Position dieser besonders guten Kopplung und damit auch die Position der ersten Elektrode bzw. des ersten Gegenstands kann mittels der separaten Auswertung des empfangenen Signals und damit der elektrischen Kopplungsstärke an den zumindest zwei Abschnitten der zweiten Elektrode in seiner Position bestimmt werden, wobei insbesondere durch die Verwendung der zwei separat ausgewerteten Abschnitte eine Bestimmung der absoluten Winkelposition zwischen dem ersten und dem zweiten Gegenstand möglich ist.

Anders ausgedrückt kann die erste Elektrode aufgrund der unterschiedlichen Länge der verbreiterten und verjüngten Abschnitte eine eindeutige geometrische Codierung schaffen, die die absolute Winkelmessung ermöglicht.

Die geometrische Codierung kann beispielsweise in der Art eines Nonius ausgebildet sein, sodass z.B. ein Maximum der elektrischen Kopplung jeweils nur an genau einem der verbreiterten Abschnitte der zweiten Elektrode auftritt. Durch die Ermittlung des Abschnitts der zweiten Elektrode, an dem das Maximum auftritt, kann dann auf die Winkelstellung der ersten Elektrode relativ zu der zweiten Elektrode geschlossen werden.

Insofern wird eine abschnittsweise Veränderung der Kopplungsstärke bewusst herbeigeführt, um eine Schwankung in der Signalstärke des Signals an den Abschnitten der zweiten Elektrode bei der Rotation der Gegenstände zu erreichen.

Der Begriff der "elektrischen Kopplung" zwischen der ersten und der zweiten Elektrode ist als kontaktlose kapazitive Kopplung zu verstehen.

Bei den verbreiterten und anschließend verjüngten Abschnitten der Elektroden handelt es sich um Abschnitte, die in radialer Richtung verbreitert bzw. verjüngt sind. Bevorzugt können die Elektroden als flächige Elektroden auf den Elektrodenträgern aufgebracht sein. Die Begriffe "verbreitert" und "verjüngt" können sich jeweils auf die bei axialer Blickrichtung sichtbare Fläche der Elektroden beziehen.

Der Elektrodenträger selbst kann zudem ebenfalls in Umfangsrichtung abwechselnd verbreitert und anschließend verjüngt ausgebildet sein. Die Elektroden können die Elektrodenträger jeweils vollständig bedecken.

Beispielsweise können die Elektroden (und damit auch die Elektrodenträger) eine ebene kreisringförmige Struktur umfassen, die in periodischen Abständen nach außen oder nach innen ragende rechteckige Zähne umfasst, wobei die Zähne dazu dienen, die abwechselnden Abschnitte mit verbreiterter und anschließend verjüngter Elektrode zu bilden und auf diese Weise eine unterschiedliche Kopplungsstärke zu erreichen.

Eine bevorzugte Ausgestaltung der Erfindung sieht vor, dass ein Abschnitt mit verbreiterter Elektrode, mit einer vorbestimmten Länge in Umfangsrichtung, eine Eins codiert, und ein Abschnitt mit verjüngter Elektrode, mit einer vorbestimmten Länge in Umfangsrichtung, eine Null codiert, wobei die erste Elektrode in Umfangsrichtung eine zufällige oder pseudozufällige binäre Folge definiert. Anders ausgedrückt stellt ein verbreiterter Abschnitt eine Eins und ein verjüngter Abschnitt eine Null dar, wobei eine Abschnittslänge, die eine Eins darstellt, jeweils gleich lang sein kann. Ebenso können alle Abschnitte, die eine Null codieren, untereinander dieselbe Länge aufweisen. Die Länge, die für eine Eins verwendet wird, kann gleich oder verschieden von der Länge sein, die für eine Null vorgesehen ist. Die Abschnitte, die eine Eins codieren, können untereinander jeweils auch die gleiche Breite (d.h. die gleiche Abmessung in radialer Richtung) aufweisen. In entsprechender Weise können auch die Abschnitte, die eine Null codieren, untereinander jeweils die gleiche Breite umfassen.

Bei der Verwendung des Begriffs "Länge" ist jeweils die Länge in Umfangsrichtung gemeint, sofern dies nicht anders angegeben ist.

Aufgrund der Wahl einer zufälligen oder pseudozufälligen Folge wird eine abwechselnde Reihe aus jeweils genau einem verbreiterten Abschnitt ("Eins") und einem verjüngten Abschnitt ("Null") ausgeschlossen, da dies eine regelmäßige Folge wäre. Durch die zufällige oder pseudozufällige Folge wird also die erwähnte eindeutige geometrische Codierung für die erste Elektrode geschaffen, die eine absolute Winkelbestimmung gestattet.

Die binäre Folge wird durch die Konstruktion bzw. bei der Herstellung der Vorrichtung festgelegt und ist somit vorbestimmt. Die erste Elektrode kann folglich eine zufällige Anordnung aus verbreiterten und verjüngten Abschnitten aufweisen, wobei die Länge der jeweiligen verbreiterten und verjüngten Abschnitte in Abhängigkeit der Zahl der aufeinanderfolgenden Nullen oder Einsen unterschiedlich lang sein kann.

Beispielsweise ist die binäre Folge eine m-Sequenz. Die binäre Folge kann also eine sogenannte Maximum-Length-Sequence sein. Allgemein gesagt, kann die binäre Folge eine eindeutige Codierung aufweisen.

Besonders bevorzugt codiert die erste Elektrode in Umfangsrichtung 63 oder 127 Nullen und Einsen und/oder codiert die zweite Elektrode in Umfangsrichtung 63 oder 127 Nullen und Einsen. Jede der Elektroden kann also in 63 oder 127 gleich lange Abschnitte aufgeteilt sein. Dies bedeutet, jede Elektrode kann in 63 oder 127 gleiche Winkelsegmente (d.h. die Abschnitte) untergliedert sein. Bevorzugt sind auf der ersten und der zweiten Elektrode gleich viele Abschnitte angeordnet.

Alternativ können auf der ersten und/oder der zweite Elektrode jeweils auch zumindest 63 oder zumindest 127 Nullen und Einsen vorgesehen sein.

Gemäß einer vorteilhaften Ausführungsform ist die Auswerteeinheit ausgebildet, eine Signalstärke des empfangenen Signals separat an jedem Abschnitt mit verbreiterter zweiter Elektrode und/oder separat an jedem Abschnitt mit verjüngter zweiter Elektrode zu bestimmen. Auf diese Weise können sich 32, 64 oder 127 Messwerte für die Signalstärke ergeben, wodurch beispielsweise Positionen mit starker elektrischer Kopplung besonders gut ermittelt werden können. Hieraus kann wiederum auf die Positionen der Einsen auf der ersten Elektrode geschlossen werden, wodurch eine besonders genaue Winkelbestimmung ermöglicht wird. Die Genauigkeit der Winkelbestimmung kann beispielsweise besser als 1° sein, da z.B. eine Vielzahl charakteristischer Stellen der m-Sequenz (d.h. der Codierung der ersten Elektrode) ermittelt werden können. Die Auswerteeinheit kann ein Messmittel umfassen, das die Erfassung der Signalstärke ermöglicht. Zur separaten Erfassung der Signalstärke können die einzelnen Abschnitte der zweiten Elektrode elektrisch gegeneinander isoliert sein.

Grundsätzlich kann es ausreichen, wenn auf der ersten Elektrode ein verbreiterter Abschnitt vorgesehen ist, welcher dann über die Auswertung aller Abschnitte der zweiten Elektrode "gefunden" werden kann, wodurch sich eine Winkelstellung zwischen dem ersten und zweiten Gegenstand ermitteln lässt. Die Verwendung beispielsweise einer m-Sequenz mit mehreren verbreiterten Abschnitten ist hier aber vorzuziehen, da mehrere verbreiterte Abschnitte eine genauere Winkelmessung gestatten.

Besonders bevorzugt weist die Auswerteeinheit einen, bevorzugt genau einen, Analog-Digital-Umsetzer auf und umfasst zudem einen Multiplexer, wobei der Multiplexer ausgebildet ist, den Analog-Digital-Umsetzer wahlweise mit einem der Abschnitte der zweiten Elektrode zu koppeln, um die Signalstärke des empfangenen Signals an dem jeweiligen Abschnitt der zweiten Elektrode zu bestimmen. Der Analog-Digital-Umsetzer kann das vorgenannte Messmittel sein, wobei aufgrund des Multiplexers nicht für jeden Abschnitt der zweiten Elektrode ein eigener Umsetzer vorgesehen sein muss, so dass die Vorrichtung wirtschaftlich herstellbar ist, da Messmittel eingespart werden können. Eine Auswertung des Analog-Digital-Umsetzers kann beispielsweise durch ein FPGA (Field Programmable Gate Array) vorgenommen werden, das insbesondere Teil der Auswerteeinheit sein kann.

Bei der separaten Auswertung der Signalstärke an jedem Abschnitt der zweiten Elektrode kann an jedem Abschnitt mittels des Analog-Digital-Umsetzers eine Spannungsmessung der entsprechenden Kopplungsspannung durchgeführt werden. Aufgrund der Kopplungsspannung kann die Position des ersten Elektrodenträgers bzw. die Drehposition der ersten Elektrode eindeutig bestimmbar sein, da für jeden Abschnitt die Kopplungsspannung gemessen werden kann und die Folge der Kopplungsspannungen im Idealfall die Codierung der ersten Elektrode (also z.B. die m-Sequenz) wiedergibt.

Beispielsweise kann eine Erfassung der Kopplungsspannung für jeden Abschnitt etwa 1 µs in Anspruch nehmen, so dass nach 63 µs (bei 63 Abschnitten auf der zweiten Elektrode) die jeweiligen Kopplungsspannungen z.B. als 8-Bit-Werte digitalisiert zur Verfügung stehen.

Liegen die beispielhaft genannten 63 Messergebnisse vor, so kann eine Korrelation mit der m-Sequenz bzw. mit der Codierung der ersten Elektrode vorgenommen werden, wobei das beste Korrelationsergebnis die genaue Winkelposition angeben kann. Für die Korrelation kann beispielsweise der Winkel als Verschiebeparameter verwendet werden.

Der Analog-Digital-Converter kann z.B. ausgebildet sein, eine Genauigkeit von 8 Bit bei einer Sampling-Rate von 1 MSPS (Mega Samples Per Second) oder 10 MSPS zu erreichen.

Bei einer besonders bevorzugten Ausgestaltung einer Ausführungsform, bei welcher die zweite Elektrode verbreiterte und verjüngte Abschnitte umfasst, weisen sowohl die verbreiterten als auch die verjüngten Abschnitte der zweiten Elektrode in Umfangsrichtung die gleiche kumulierte Länge auf. Dies bedeutet, dass 50% der Länge der zweiten Elektrode von verbreiterten Abschnitten und 50% der Länge der zweiten Elektrode von verjüngten Abschnitten belegt ist. Zusätzlich können alle Abschnitte der zweiten Elektrode, unabhängig davon, ob sie eine Eins oder eine Null codieren, die gleiche Länge aufweisen.

Gemäß einer alternativen Ausführungsform, bei welcher die zweite Elektrode verbreiterte und verjüngte Abschnitte umfasst, sind die verbreiterten Abschnitte der zweiten Elektrode in Umfangsrichtung länger ausgebildet als die verjüngten Abschnitte der zweiten Elektrode, wobei die verbreiterten Abschnitte bevorzugt 1,5-mal so lang wie die verjüngten Abschnitte sind. Aufgrund der verlängerten verbreiterten Abschnitte kann eine elektrische Kopplung bzw. eine Signalstärke zwischen der ersten und der zweiten Elektrode erhöht werden, so dass die Signalübertragung zwischen der ersten und der zweiten Elektrode verbessert wird.

Gemäß einer weiteren vorteilhaften Ausführungsform ist die Steuereinheit ausgebildet, das Signal in einer Weise zu erzeugen, dass es eine erste Frequenz und eine zweite Frequenz umfasst, wobei die Steuereinheit eingerichtet ist, die Nutzdaten mittels der zweiten Frequenz zu übertragen. Dies bedeutet, dass das zwischen der ersten und der zweiten Elektrode übertragene Signal zwei verschiedene Frequenzen umfassen kann, wobei die erste Frequenz für die Winkelmessung und die zweite Frequenz zur Übertragung der Nutzdaten verwendet werden kann. Auf diese Weise interferiert eine Übertragung der Nutzdaten nicht mit der Ermittlung der Winkeländerung, wodurch die Winkeländerung noch genauer bestimmt werden kann.

Bevorzugt weist die erste Frequenz keine Amplitudenmodulation auf und/oder ist die zweite Frequenz amplitudenmoduliert. Die Übertragung der Nutzdaten kann also mittels einer Amplitudenmodulation erfolgen. Für die Ermittlung der Winkeländerung wird hingegen keine von vornherein eingeprägte Amplitudenmodulation verwendet, da aufgrund der in Umfangsrichtung verschieden starken elektrischen Kopplung bei der Drehung der Gegenstände eine Amplitudenmodulation eintreten kann.

Gemäß einer weiteren vorteilhaften Ausführungsform ist die erste Frequenz kleiner als die zweite Frequenz, wobei die erste Frequenz bevorzugt kleiner oder gleich 75 MHz und die zweite Frequenz bevorzugt größer oder gleich 300 MHz ist. Durch eine derartige Wahl der Frequenzen können die erste und die zweite Frequenz auf einfache Weise mittels eines Filters voneinander getrennt werden. Zudem nimmt die Stärke der elektrischen Kopplung üblicherweise mit der Frequenz zu, wodurch zugleich eine robuste Datenübertragung und die Ermittlung der Winkeländerung ermöglicht werden. Für die Datenübertragung kann eine Bandbreite von größer oder gleich 30 MHz verwendet werden.

Gemäß einer weiteren vorteilhaften Ausführungsform ist koaxial und drehfest zu dem ersten Elektrodenträger eine erste Spule vorgesehen und ist koaxial und drehfest zu dem zweiten Elektrodenträger eine zweite Spule vorgesehen, die der ersten Spule derart bezüglich der Rotationsachse axial beabstandet gegenübersteht, dass eine Energieübertragung durch induktive Kopplung zwischen den zwei Spulen möglich ist. Insbesondere kann die Vorrichtung zur Energieübertragung zwischen den beiden Gegenständen ausgebildet sein. Neben der Übertragung von Daten ist somit auch die Übertragung von Energie zwischen den Gegenständen möglich, wodurch beispielsweise die für den Betrieb eines Sensorkopfes eines Laserscanners notwendige Energie mittels der Vorrichtung übertragbar ist.

Bevorzugt ist in einem radialen Bereich zwischen der ersten Spule und der ersten Elektrode und/oder zwischen der zweiten Spule und der zweiten Elektrode jeweils koaxial zwischen Spule und Elektrode eine Anordnung aus leitfähigem Material zur elektrischen Abschirmung vorgesehen. Es ist damit auf effektive Weise möglich, trotz einer kompakten Anordnung der Vorrichtung, Störungen der Datenübertragung über die Elektrode durch die benachbart angeordnete induktive Energieübertragung mittels der Spulen wirksam einzuschränken. Trotzdem ist eine kleine Bauform möglich, weil die induktive Energieübertragung und die elektrische Datenübertragung räumlich nicht weit auseinanderliegen müssen, um die ansonsten stattfindende elektromagnetische Störung zu verhindern.

Eine einfache und leicht handzuhabende Ausgestaltung sieht vor, dass die Spule bzw. die Spulen konzentrisch zu der Drehachse der Relativbewegung der Gegenstände sind.

Grundsätzlich ist es möglich, dass die Spulen selbsttragende Strukturen sind. Besonders vorteilhaft ist es jedoch, wenn der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt. Derartige scheiben- oder ringscheibenförmige Spulenträger sind einfach herzustellen und können z.B. durch lithographische Prozesse prozessiert werden, um die Spulen darauf aufzubringen. Außerdem sind bei einer solchen Ausgestaltung nicht nur die Elektrodenträger scheiben- oder ringscheibenförmig ausgestaltet und stehen sich zur Datenübertragung axial beabstandet gegenüber, sondern auch die Spulen auf dem scheiben- oder ringscheibenförmig ausgestalteten Spulenträger stehen sich axial beabstandet gegenüber, um die induktive Kopplung zur Energieübertragung zu ermöglichen. Auf diese Weise ist ein sehr kompakter und einfacher Aufbau gewährleistet. Besonders einfach und vorteilhaft ist es dabei, wenn die Spulenträger direkt als Leiterkarten ausgestaltet sind, auf denen die jeweiligen Spulenwindungen zur Energieübertragung aufgebracht sind. Ebenso können die Elektrodenträger Leiterkarten umfassen, auf die die Elektroden zur Datenübertragung aufgebracht sind. Die metallischen Spulenwindungen zur Energieübertragung bzw. die Elektroden zur Datenübertragung lassen sich auf Leiterkarten sehr einfach durch an sich bekannte lithographische Prozesse (z.B. Aufdampfen oder Ätzen) herstellen.

Auf diese Weise ist die Geometrie der Spulenwindungen bzw. der Elektroden auf einfache Weise festlegbar und die Leiterkarten können selbst als Träger für die Spulenwindungen bzw. die Elektroden dienen.

Besonders einfach und in der Herstellung kostengünstig ist es, wenn am ersten Gegenstand der erste Spulenträger und der erste Elektrodenträger einstückig vorgesehen sind (also durch ein Teil gebildet werden kann) und/oder am zweiten Gegenstand der zweite Spulenträger und der zweite Elektrodenträger einstückig sind. Auf diese Weise muss jeweils nur eine Trägerstruktur, z.B. eine Leiterkarte pro Gegenstand, vorgesehen sein. Auf dieser Leiterkarte können dann jeweils die Spule zur Energieübertragung und die Elektrode zur Datenübertragung vorgesehen sein und bei der Herstellung gleichzeitig prozessiert werden.

Bei Ausgestaltungen, bei der die Spulenträger bzw. die Elektrodenträger als Leiterkarten vorgesehen sind, ist es zudem von besonderem Vorteil, dass es auf platzsparende Weise möglich ist, weitere - insbesondere elektronische - Komponenten und Verbindungsleitungen vorzusehen.

Bei erfindungsgemäßen Ausgestaltungen, bei der der erste Gegenstand einen ersten scheiben- oder ringscheibenförmigen Spulenträger umfasst, der die erste Spule trägt, und der zweite Gegenstand einen zweiten scheiben- oder ringscheibenförmigen Spulenträger umfasst, der die zweite Spule trägt, sind die Spulen vorteilhafterweise flächig ausgestaltet. Das heißt, sie umfassen Spulenwindungen, die auf einer Fläche des jeweiligen scheiben- oder ringscheibenförmigen Spulenträgers nebeneinander angeordnet sind. Grundsätzlich ist es möglich, dass auf der zweiten Fläche des jeweiligen Spulenträgers jeweils eine weitere flächige Spule vorgesehen ist, die die induktive Kopplung z.B. über eine Ferritstruktur verstärkt.

Bevorzugt ist es jedoch, wenn sich die Spulenwindungen der ersten Spule (am ersten Gegenstand) und die Spulenwindungen der zweiten Spule (am zweiten Gegenstand) auf den gegenüberliegenden Seiten der beiden Spulenträger gegenüber stehen, wie es auch weiter unten unter Bezug auf die in den Figuren gezeigte Ausgestaltung beschrieben ist.

Eine einfache Realisierung der Abschirmung zwischen den energieübertragenden Spulen und den datenübertragenden Elektroden bei einer Ausführungsform mit Leiterkarten als Trägerstrukturen sieht vor, dass zwischen den Spulenwindungen und dem elektrischen Leiter Bohrungen in der jeweiligen Leiterkarte vorgesehen sind, in denen sich leitfähiges Material befindet. Dazu kann insbesondere vorgesehen sein, dass die Innenumfänge der Bohrungen in den Leiterkarten mit metallischem Material beschichtet sind, um eine Abschirmung zu bewirken, die auf einfache Weise realisiert werden kann, ohne die Trägerstruktur zu sehr zu schwächen.

Besonders vorteilhaft ist es, wenn die Vorrichtung eine erste Gehäuseschale aus leitfähigem Material und/oder eine zweite Gehäuseschale aus leitfähigem Material aufweist, wobei die erste Gehäuseschale drehfest mit dem ersten Gegenstand und die zweite Gehäuseschale drehfest mit dem zweiten Gegenstand ist. Die Gehäuseschalen aus leitfähigem Material dienen zur elektrischen Abschirmung des Systems nach außen und verhindern auf wirksame Weise Störungen durch externe Einflüsse.

Außerdem bieten derartig angeordnete und ausgestaltete Gehäuseschalen eine Verbindung zu einer virtuellen Masse, indem sie eine kapazitive Kopplung zwischen der realen Masse und der virtuellen Masse bewirken.

Besonders vorteilhaft ist es, wenn die erste Gehäuseschale dabei elektrisch mit der elektrischen Anordnung zwischen den Spulenwindungen der ersten Spule und dem ersten elektrischen Leiter verbunden ist und die zweite Gehäuseschale elektrisch mit der elektrischen Anordnung aus leitfähigem Material zur elektrischen Abschirmung zwischen den Spulenwindungen der zweiten Spule und dem zweiten elektrischen Leiter verbunden ist.

Auf diese Weise sind die Abschirmungsanordnungen zwischen den jeweiligen Spulenwindungen und Elektroden elektrisch mit jeweils einer Gehäuseschale verbunden, so dass eine wirksame Abschirmung der Datenübertragung gegenüber jeglichen äußeren Einflüssen und insbesondere auch gegenüber den Einflüssen der zur Energieübertragung verwendeten Spulen vorgesehen ist. Nur diejenige Seite des Elektrodenträgers, die dem Elektrodenträger auf dem anderen sich relativ drehenden Gegenstand direkt gegenübersteht, ist nicht von der Abschirmung umgeben.

Die Verbindung kann zum Beispiel durch eine leitfähige ringförmige Struktur, z.B. leitfähigem Schaumstoff gebildet sein, der koaxial zur Drehachse zwischen Spule und Elektrode angeordnet ist.

Besonders wirksam ist die Abschirmung durch die Gehäuseschalen, wenn die beide Gehäuseschalen an ihrem radial äußeren Bereich jeweils einen abgewinkelten Bereich umfassen, wobei die abgewinkelten Bereiche der beiden Gehäuseschalen radial beabstandet zueinander nebeneinander stehen. Je größer der überlappende Bereich der Abschirmung (insbesondere der Gehäuseschalen) ist und desto geringer der Abstand der überlappenden Bereiche ist, umso besser ist die abschirmende Wirkung.

Weiterer Gegenstand der Erfindung ist ein Verfahren gemäß Anspruch 14.

Bei der Verwendung in einem Laserscanner ist die Vorrichtung besonders vorteilhaft einsetzbar, da eine Winkelposition des Sensorkopfes relativ zu der Versorgungseinheit jederzeit bekannt sein muss, wobei der Laserscanner durch den Entfall eines zusätzlichen Winkelencoders besonders klein und kompakt ausgebildet werden kann. Vollführt der Sensorkopf beispielsweise fünfundzwanzig Umdrehungen pro Sekunde, so überstreicht der Sensorkopf in 111 µs einen Winkel von 1°. Bei dem oben genannten Beispiel, bei welchem 63 µs für die Bestimmung der Winkelposition benötigt werden, wäre es dann möglich, die Winkelposition öfters als alle 111 µs zu bestimmen.

Die zu dem erfindungsgemäßen Laserscanner getroffenen Aussagen, insbesondere hinsichtlich Vorteilen und bevorzugten Ausführungsformen gelten für das erfindungsgemäße Verfahren entsprechend.

Nachfolgend wird die Erfindung rein beispielhaft unter Bezugnahme auf die Zeichnungen beschrieben. Es zeigen:
- Fig. 1: eine Vorrichtung in schematischer Darstellung im seitlichen Schnitt;
- Fig. 2: eine zweite Elektrode in Draufsicht; und
- Fig. 3: zwei bezüglich einer Rotationsachse axial beabstandet gegenüberstehende Elektroden in perspektivischer Darstellung samt zugehöriger Auswerteeinheit.

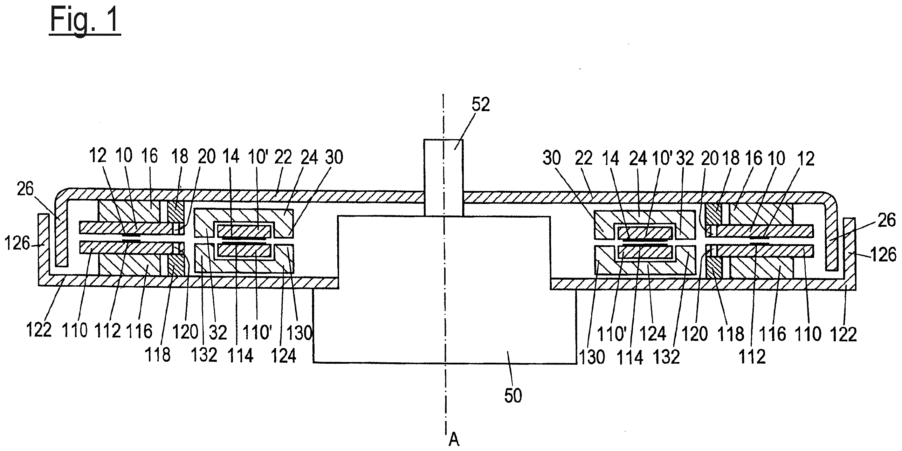

Fig. 1 zeigt eine Ausgestaltung einer Vorrichtung im seitlichen Schnitt in schematischer Darstellung. Im seitlichen Schnitt sieht man zwei sich gegenüberstehende Leiterkarten 10, 110, die gegeneinander um die Achse A relativ zueinander beweglich sind.

Auf dem radial inneren Bereich 10' der Leiterkarte 10 befindet sich auf derjenigen Seite, die der Leiterkarte 110 gegenübersteht, eine Spule 14 mit Spulenwindungen, die im Wesentlichen konzentrisch zur Drehachse A der Relativbewegung sind. Diese Spulenwindungen sind im Schnitt der Fig. 1 schematisch als nur ein schwarzer Balken an der Unterseite des Leiterkartenabschnitts 10' gezeigt. Die Spulenwindungen werden auf der jeweiligen Leiterkarte durch aufgedampfte oder geätzte Leiterbahnen gebildet. Für die Spule 14 auf der Leiterkarte 10 und die sie bildenden Spulenwindungen wird der einfachen Darstellung halber im vorliegenden Text dieselbe Bezugsziffer 14 verwendet.

Im äußeren Bereich der Leiterkarte 10 befindet sich auf derjenigen Seite, die der Leiterkarte 110 gegenübersteht, eine erste Elektrode 12, die konzentrisch zur Drehachse A als Leiterbahn ringförmig angeordnet ist.

Nicht gezeigt ist, dass derjenige Leiterkartenbereich der Leiterkarte 10, auf dem die erste Elektrode 12 aufgebracht ist, und der Leiterkartenbereich 10', auf dem die Spule 14 aufgebracht ist, durch entsprechende radiale Stege miteinander verbunden sind. Bei der beschriebenen Ausführungsform bilden also der Spulenträgerbereich 10' und der Elektrodenträger mit der ersten Elektrode 12 eine einstückige Leiterkarte 10.

Die Leiterkarte 10 ist über einen oder mehrere isolierende Abstandshalter 16 (Fig. 1) mit einer metallischen Gehäuseschale 22 verbunden, die zum Beispiel ein Tiefziehblech umfassen kann. Bei der beschriebenen Ausführungsform ist diese Gehäuseschale 22 mit der Antriebswelle 52 eines Antriebsmotors 50 drehfest verbunden, so dass sich die Gehäuseschale 22 zusammen mit der Leiterkarte 10 und den darauf aufgebrachten Strukturen dreht.

Die Antriebswelle 52 ist drehfest mit einem (nicht gezeigten) ersten Gegenstand gekoppelt, sodass auch die Gehäuseschale 22 und die Leiterkarte 10 drehfest mit dem ersten Gegenstand sind. In entsprechender Weise ist ein Gehäuse des Antriebsmotors 50 drehfest mit einem (ebenfalls nicht gezeigten) zweiten Gegenstand verbunden. Der zweite Gegenstand ist folglich drehfest mit der Leiterkarte 110 gekoppelt.

In bzw. an der Leiterkarte 10 ist - bezüglich der ersten Elektrode 12 radial nach innen versetzt - eine Abschirmungsstruktur 18, 20 vorgesehen, die bei der beschriebenen Ausführungsform wie folgt ausgestaltet ist:
In der Leiterkarte 10 befinden sich radial gegenüber der Elektrode 12 nach innen versetzt auf einem Ring angeordnete Bohrungen 20, deren Inneres metallisch ausgekleidet ist, z.B. durch einen entsprechenden Aufdampfprozess. Diese metallisch ausgekleideten Bohrungen 20 stehen über ein metallisches Material 18 mit der Gehäuseschale 22 in elektrischer Verbindung. Bei dem metallischen Material 18 kann es sich z.B. um leitenden Schaumstoff handeln.

Wie es in Fig. 1 sichtbar ist, weist die Gehäuseschale 22 an der radial äußeren Seite der Leiterkarte 10 einen abgewinkelten Bereich 26 auf. Insgesamt ergibt sich auf diese Weise eine Abschirmungsstruktur, die aus den metallisch ausgekleideten Bohrungen 20, der ringförmigen Materialstruktur 18, der planaren Fläche der Gehäuseschale 22 und dem abgewinkelten Bereich 26 der Gehäuseschale 22 gebildet wird.

An dem Antriebsmotor 50 ist bei der beschriebenen Ausgestaltung eine Gehäuseschale 122 fest montiert. Diese Gehäuseschale 122 trägt eine Struktur, die der beschriebenen Struktur, die in der Gehäuseschale 22 vorgesehen ist, entspricht und ihr gegenübersteht. So ist hier eine zweite Elektrode 112 auf einem Leiterkartenbereich einer Leiterkarte 110 vorgesehen, der über einen oder mehrere isolierende Abstandshalter 116 mit der Gehäuseschale 122 verbunden ist. Eine ringförmige Struktur aus metallischem Schaumstoff 118 verbindet die Gehäuseschale 122 mit Bohrungen 120, die in der Leiterkarte 110 ringförmig angeordnet sind und metallisch ausgekleidet sind. Am radial äußersten Bereich der Gehäuseschale 122 weist diese einen abgewinkelten Bereich 126 auf.

Es ist erkennbar, dass die sich gegenüberstehenden Elektroden 12 bzw. 112 auf den sich gegenüberstehenden Leiterkarten 10 bzw. 110 effektiv durch die Abschirmungsstruktur abgeschirmt sind, die durch die Gehäuseschalen 22, 122, deren abgewinkelten Bereichen 26, 126, den Strukturen aus metallischem Schaumstoff 18, 118 und den metallisch ausgekleideten ringförmig angeordneten Bohrungen 20, 120 gebildet wird. Besonders effektiv ist die Abschirmung nach außen, wenn sich wie bei der gezeigten Ausführungsform die abgewinkelten Bereiche 26, 126 der beiden Gehäuseschalen 22, 122 überlappen.

Die Gehäuseschalen 22, 122 und insbesondere die abgewinkelten Bereiche 26, 126 bilden außerdem noch eine wirksame kapazitive Kopplung der Masse zwischen den sich relativ zueinander drehenden Elementen.

Radial innerhalb der Struktur mit der ersten Elektrode 12 sind die bereits beschriebenen lithographisch hergestellten Spulenwindungen 14 auf dem Leiterkartenbereich 10' vorgesehen. Diesen Spulenwindungen 14 stehen auf der in Fig. 1 unteren Leiterkarte 110 in deren Bereich 110' Spulenwindungen 114 gegenüber, die genauso wie die Spulenwindungen 14 auf der jeweilige Leiterkarte lithographisch hergestellt sind. Für die Spule auf der Leiterkarte 110 und die sie bildenden Spulenwindungen wird der einfachen Darstellung halber im vorliegenden Text dieselbe Bezugsziffer 114 verwendet.

Der Leiterkartenbereich 10' wird von einer Ferritstruktur 24 umgeben. Man sieht, dass diese Struktur abgewinkelte Bereiche 30, 32 aufweist, die die Leiterplatte 10' durchsetzen. Dabei weist der äußere abgewinkelte Abschnitt 32 nur an den Bereichen Ausschnitte auf, durch die die Stegbereiche der Leiterkarte 10 hindurchgreifen, die den Leiterkartenbereich 10' mit der übrigen Leiterkarte verbinden.

Die Ferritstruktur 24 wirkt auf diese Weise besonders wirksam mit einer Ferritstruktur 124 an der anderen Leiterkarte 110 zusammen. Die zweite Ferritstruktur 124 umschließt dabei den Leiterkartenbereich 110' der zweiten Leiterkarte 110 in der gleichen Weise, wie die Ferritstruktur 24 den Leiterkartenbereich 10' der Leiterkarte 10. Auf die Weise wird die induktive Kopplung zwischen den sich gegenüberstehenden Spulen 14, 114 durch die Ferritstrukturen 24, 124 wirksam transformatorisch verstärkt. Außerdem wirken die Ferritstrukturen 24, 124 zusätzlich abschirmend in der Weise, dass die elektrische Kopplung der Elektroden 12, 112 zur Datenübertragung nicht oder weniger durch die induktive Kopplung zwischen den Spulen 14 und 114 gestört wird.

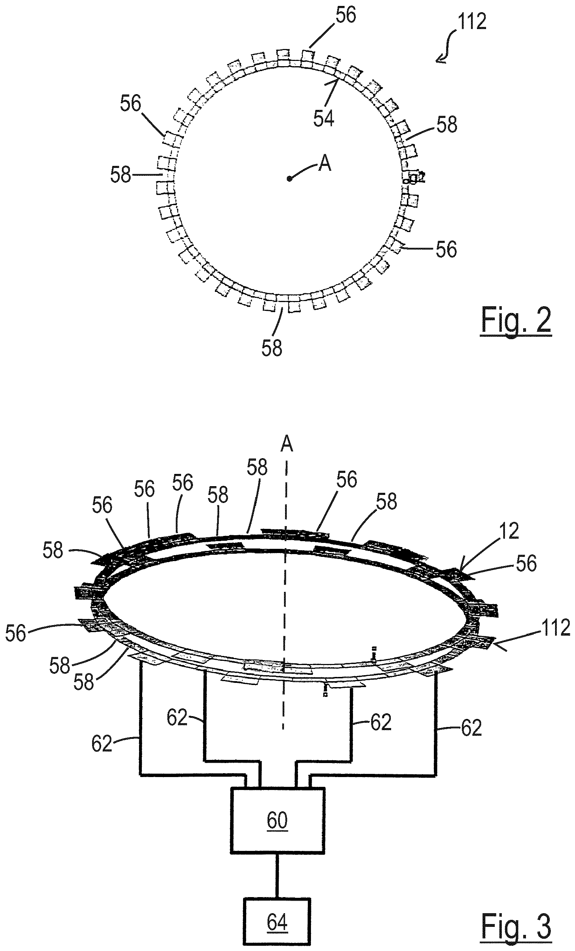

In Fig. 2 ist eine erste Ausführungsform einer zweite Elektrode 112, wie sie in Fig. 1 zum Einsatz kommt, in Draufsicht gezeigt. Die ringscheibenförmige zweite Elektrode 112 umfasst einen ringförmigen Bereich 54 sowie eine Vielzahl von rechteckigen Zähnen 56, die von dem ringförmigen Bereich 54 nach außen abstehen. Zwischen zwei Zähnen 56 ist jeweils eine Aussparung 58 vorgesehen, die in Umfangsrichtung gesehen eine gleiche Länge wie die Zähne 56 aufweist.

In Fig. 3 ist gezeigt, wie sich eine zweite Ausführungsform der zweiten Elektrode 112 und die erste Elektrode 12 gegenüberstehen.

Die erste Elektrode 12 weist ebenfalls Zähne 56 und Aussparungen 58 auf, wobei jeder Zahn 56 eine Eins und jede Aussparung 58 eine Null codiert. Die von den Zähnen 56 und den Aussparungen 58 codierte Folge ist pseudo-zufällig.

Im Unterschied zu der ersten Ausführungsform von Fig. 2 sind bei der zweiten Elektrode 112 gemäß Fig. 3 jeweils zwei Aussparungen 58 in Folge vorgesehen, denen sich ein Zahn 56 anschließt.

Sämtliche Aussparungen 58 und Zähne 56 der zweiten Elektrode 112 sind mit einem Multiplexer 60 gekoppelt, wobei in Fig. 3 beispielhaft lediglich vier Verbindungsleitungen 62 zwischen dem Multiplexer 60 und der zweiten Elektrode 112 gezeigt sind. Die einzelnen Abschnitte der zweiten Elektrode 112, d.h. die Zähne 56 und die Aussparungen 58, sind jeweils elektrisch zueinander isoliert.

Im Betrieb wird von der ersten Elektrode 12 an die zweite Elektrode 112 ein Signal mit Nutzdaten übertragen, wobei eine jeweilige Kopplungsstärke an den Zähnen 56 und den Aussparungen 58 der zweiten Elektrode 112 mittels eines Analog-Digital-Konverters 64 ermittelt wird. Hierzu wird der Analog-Digital-Konverter 64 jeweils von dem Multiplexer 60 zu einem Zeitpunkt mit einem Zahn 56 oder einer Aussparung 58 gekoppelt.

Aufgrund der bekannten Struktur der ersten Elektrode 12 kann beim Vorliegen von Messwerten für sämtliche Abschnitte der zweiten Elektrode 112 mittels Korrelation auf die absolute Drehposition der ersten Elektrode 12 relativ zu der zweiten Elektrode 112 geschlossen werden.

### Bezugszeichenliste

- 10, 110: Leiterkarte
- 10', 110': radial innerer Bereich der Leiterkarte
- 12, 112: erste Elektrode, zweite Elektrode
- 14, 114: Spule, Spulenwindungen
- 16, 116: isolierender Abstandshalter
- 18, 118: ringförmige metallische Schaumstoffstruktur
- 20, 120: ringförmig angeordnete metallisch ausgekleidete Bohrungen
- 22, 122: Gehäuseschale
- 24, 124: Ferritstruktur
- 26, 126: abgewinkelter Bereich der Gehäuseschale
- 30, 130: radial innerer abgewinkelter Bereich der Ferritstruktur
- 32, 132: radial äußerer abgewinkelter Abschnitt der Ferritstruktur
- 50: Antriebsmotor
- 52: Antriebswelle
- 54: ringförmiger Bereich
- 56: Zahn
- 58: Aussparung
- 60: Multiplexer
- 62: Verbindungsleitung
- 64: Analog-Digital-Konverter

- A: Achse der relativen Rotationsbewegung

## Patentansprüche

1. Laserscanner mit einer Vorrichtung zur kontaktlosen Übertragung von Daten und zur Ermittlung einer Winkeländerung, wobei der Laserscanner einen, relativ um eine Rotationsachse (A) drehbaren, ersten Gegenstand bildenden Sensorkopf und eine einen zweiten Gegenstand bildende Versorgungseinheit umfasst, wobei bei der Vorrichtung zur kontaktlosen Übertragung von Daten und zur Ermittlung einer Winkeländerung
- an dem ersten Gegenstand ein erster Elektrodenträger (10) vorgesehen ist, der eine erste Elektrode (12) umfasst,
- an dem zweiten Gegenstand ein zweiter Elektrodenträger (110) vorgesehen ist, der eine zweite Elektrode (112) umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei sich die Stärke der elektrischen Kopplung entlang der umfangsmäßigen Erstreckung der ersten und der zweiten Elektrode (12, 112) verändert,
wobei eine Steuereinheit vorgesehen ist, die ausgebildet ist, ein Signal von der ersten Elektrode (12) an die zweite Elektrode (112) zu übertragen, und eine Auswerteeinheit (60, 64) vorgesehen ist, die ausgebildet ist, eine Signalstärke des empfangenen Signals separat an zumindest zwei elektrisch gegeneinander isolierten Abschnitten (56, 58) der zweiten Elektrode (112) zu bestimmen und auszuwerten, um eine Winkeländerung zwischen dem ersten und dem zweiten Gegenstand zu ermitteln.

2. Laserscanner nach Anspruch 1, wobei die Elektrodenträger (10, 110) derart ausgebildet sind, dass sich die Stärke der elektrischen Kopplung entlang der umfangsmäßigen Erstreckung der ersten und der zweiten Elektrode (12, 112) abschnittsweise verändert, wobei zumindest zwei der so gebildeten Abschnitte (56, 58) eine unterschiedliche Länge aufweisen.

3. Laserscanner nach Anspruch 1 oder 2, wobei sich die Form zumindest einer der Elektroden (12, 112) entlang ihrer Erstreckung in Umfangsrichtung verändert und/oder dass ein Dielektrikum auf zumindest einer der Elektroden (12, 112) aufgebracht ist und/oder dass eine Abschirmung vorgesehen ist und/oder dass zumindest eine der Elektroden (12, 112) eine dreidimensionale Form umfasst, um die Stärke der elektrischen Kopplung entlang der umfangsmäßigen Erstreckung der ersten und der zweiten Elektrode (12, 112) zu verändern.

4. Laserscanner nach zumindest einem der vorstehenden Ansprüche, wobei der erste Elektrodenträger (10) in Umfangsrichtung abwechselnde Abschnitte (56, 58) mit verbreiterter und anschließend verjüngter erster Elektrode (12) aufweist, von welchen zumindest zwei Abschnitte (56, 58) eine unterschiedliche Länge aufweisen, und der zweite Elektrodenträger (110) in Umfangsrichtung abwechselnde Abschnitte (56, 58) mit verbreiterter und anschließend verjüngter zweiter Elektrode (112) aufweist.

5. Laserscanner nach Anspruch 4, wobei ein Abschnitt (56) mit einer vorbestimmten Länge in Umfangsrichtung mit verbreiterter Elektrode eine Eins codiert und ein Abschnitt (58) mit der vorbestimmten Länge in Umfangsrichtung mit verjüngter Elektrode eine Null codiert, wobei die erste Elektrode (12) in Umfangsrichtung eine zufällige oder pseudozufällige binäre Folge definiert.

6. Laserscanner nach Anspruch 5, wobei die binäre Folge eine m-Sequenz ist.

7. Laserscanner nach Anspruch 5 oder 6, wobei die erste Elektrode (12) in Umfangsrichtung 63 oder 127 Nullen und Einsen codiert und/oder die zweite Elektrode (112) in Umfangsrichtung 63 oder 127 Nullen und Einsen codiert.

8. Laserscanner nach zumindest einem der Ansprüche 4 bis 7, wobei die Auswerteeinheit (60, 64) ausgebildet ist, eine Signalstärke des empfangenen Signals separat an jedem Abschnitt (56) mit verbreiterter zweiter Elektrode (112) und/oder separat an jedem Abschnitt (58) mit verjüngter zweiter Elektrode (112) zu bestimmen.

9. Laserscanner nach Anspruch 8, wobei die Auswerteeinheit einen, bevorzugt genau einen, Analog-Digital-Umsetzer (64) aufweist und einen Multiplexer (60) umfasst, wobei der Multiplexer (60) ausgebildet ist, den Analog-Digital-Umsetzer (64) wahlweise mit einem der Abschnitte (56, 58) der zweiten Elektrode (112) zu koppeln, um die Signalstärke des empfangenen Signals an dem jeweiligen Abschnitt (56, 58) der zweiten Elektrode (112) zu bestimmen.

10. Laserscanner nach zumindest einem der Ansprüche 4 bis 9, wobei sowohl die verbreiterten als auch die verjüngten Abschnitte (56, 58) der zweiten Elektrode (112) in Umfangsrichtung die gleiche kumulierte Länge aufweisen.

11. Laserscanner nach zumindest einem der Ansprüche 4 bis 9, wobei die verbreiterten Abschnitte (56) der zweiten Elektrode (112) in Umfangsrichtung länger ausgebildet sind als die verjüngten Abschnitte (58) der zweiten Elektrode (112), wobei die verbreiterten Abschnitte (56) bevorzugt 1,5 mal so lang wie die verjüngten Abschnitte (58) sind.

12. Laserscanner nach zumindest einem der vorstehenden Ansprüche, wobei die Steuereinheit ausgebildet ist, das Signal in einer Weise zu erzeugen, dass es eine erste Frequenz und eine zweite Frequenz umfasst, wobei die Steuereinheit eingerichtet ist, die Nutzdaten mittels der zweiten Frequenz zu übertragen.

13. Laserscanner nach zumindest einem der vorstehenden Ansprüche, wobei
- koaxial und drehfest zu dem ersten Elektrodenträger (10) eine erste Spule (14) vorgesehen ist,
- koaxial und drehfest zu dem zweiten Elektrodenträger (110) eine zweite Spule (114) vorgesehen ist, die der ersten Spule (14) derart bezüglich der Rotationsachse (A) axial beabstandet gegenübersteht, dass eine Energieübertragung durch induktive Kopplung zwischen den zwei Spulen (14, 114) möglich ist, wobei
in einem radialen Bereich zwischen der ersten Spule (14) und der ersten Elektrode (12) und/oder zwischen der zweiten Spule (114) und der zweiten Elektrode (112) jeweils koaxial zwischen Spule (14, 114) und Elektrode (12, 112) eine Anordnung aus leitfähigem Material (18, 20; 118, 120) zur elektrischen Abschirmung vorgesehen ist.

14. Verfahren zur kontaktlosen Übertragung von Daten und zur Ermittlung einer Winkeländerung zwischen einem einen ersten Gegenstand bildenden Sensorkopf und einer einen zweiten Gegenstand bildenden Versorgungseinheit eines Laserscanners, wobei die zwei Gegenstände sich um eine gemeinsame Rotationsachse (A) relativ zueinander bewegen, wobei das Verfahren die folgenden Schritte umfasst:
- Vorsehen eines ersten Elektrodenträgers (10) an dem ersten Gegenstand, wobei der erste Elektrodenträger (10) eine erste Elektrode (12) umfasst,
- Vorsehen eines zweiten Elektrodenträgers (110) an dem zweiten Gegenstand, wobei der zweite Elektrodenträger (110) eine zweite Elektrode umfasst, wobei sich der erste und der zweite Elektrodenträger (10, 110) bezüglich der Rotationsachse (A) axial beabstandet gegenüberstehen und die erste und die zweite Elektrode (12, 112) derart angeordnet sind, dass eine Datenübertragung durch elektrische Kopplung zwischen der ersten und der zweiten Elektrode (12, 112) möglich ist, wobei die Stärke der elektrischen Kopplung entlang der umfangsmäßigen Erstreckung der ersten und der zweiten Elektrode (12, 112) schwankt,
- Übertragen eines Signals von der ersten Elektrode (12) an die zweite Elektrode (112),
- Auswerten der Signalstärke des empfangenen Signals separat an zumindest zwei elektrisch gegeneinander isolierten Abschnitten (56, 58) der zweiten Elektrode (112), um eine Winkeländerung zwischen dem ersten und dem zweiten Gegenstand zu ermitteln.

## Claims

1. A laser scanner having an apparatus for the contactless transmission of data and for the determination of an angle change, wherein the laser scanner comprises a sensor head which is rotatable in a relative manner about an axis of rotation (A) and which forms a first object; and a supply unit which forms a second object; wherein, in the apparatus for the contactless transmission of data and for the determination of an angle change,
- a first electrode carrier (10) which comprises a first electrode (12) is provided at the first object and
- a second electrode carrier (110) which comprises a second electrode (112) is provided at the second object, with the first and second electrode carriers (10, 110) being disposed opposite and axially spaced apart with respect to the axis of rotation (A) and the first and second electrodes (12, 112) being arranged such that a data transmission is possible by an electrical coupling between the first and second electrodes (12, 112), and with the strength of the electrical coupling varying along the peripheral extent of the first and second electrodes (12, 112); and
wherein a control unit is provided which is configured to transmit a signal from the first electrode (12) to the second electrode (112) and an evaluation unit (60, 64) is provided which is configured to determine and evaluate a signal strength of the received signal separately at at least two sections (56, 58) of the second electrode (112) which are electrically insulated with respect to one another in order to determine an angle change between the first object and the second object.

2. A laser scanner in accordance with claim 1,
wherein the electrode carriers (10, 110) are configured such that the strength of the electrical coupling varies sectionally along the peripheral extent of the first and second electrodes (12, 112), with at least two of the sections (56, 58) formed in this manner having a different length.

3. A laser scanner in accordance with claim 1 or claim 2,
wherein the shape of at least one of the electrodes (12, 112) varies along its extent in the peripheral direction; and/or wherein a dielectric is applied to at least one of the electrodes (12, 112); and/or wherein a shield is provided; and/or wherein at least one of the electrodes (12, 112) comprises a three-dimensional shape to vary the strength of the electrical coupling along the peripheral extent of the first and second electrodes (12, 112).

4. A laser scanner in accordance with at least one of the preceding claims, wherein the first electrode carrier (10) has alternating sections (56, 58) in the peripheral direction with a widened and subsequently reduced first electrode (12) of which at least two sections (56, 58) have a different length; and wherein the second electrode carrier (110) has alternating sections (56, 58) in the peripheral direction with a widened and subsequently reduced second electrode (112).

5. A laser scanner in accordance with claim 4,
wherein a section (56) having a predetermined length in the peripheral direction with a widened electrode codes a one and a section (58) having the predetermined length in the peripheral direction with a reduced electrode codes a zero, with the first electrode (12) defining a random or a pseudo-random binary sequence in the peripheral direction.

6. A laser scanner in accordance with claim 5,
wherein the binary sequence is an m sequence.

7. A laser scanner in accordance with claim 5 or claim 6,
wherein the first electrode (12) codes 63 or 127 zeros and ones in the peripheral direction and/or the second electrode (112) codes 63 or 127 zeros and ones in the peripheral direction.

8. A laser scanner in accordance with at least one of the claims 4 to 7, wherein the evaluation unit (60, 64) is configured to determine a signal strength of the received signal separately at each section (56) with a widened second electrode (112) and/or separately at each section (58) with a reduced second electrode (112).

9. A laser scanner in accordance with claim 8,
wherein the evaluation unit comprises an analog-to-digital converter, preferably exactly one analog-to-digital converter (64), and a multiplexer (60), with the multiplexer (60) being configured to selectively couple the analog-to-digital converter (64) to one of the sections (56, 58) of the second electrode (112) in order to determine the signal strength of the received signal at the respective section (56, 58) of the second electrode (112).

10. A laser scanner in accordance with at least one of the claims 4 to 9, wherein the widened and reduced sections (56, 58) of the second electrode (112) have the same accumulated length in the peripheral direction.

11. A laser scanner in accordance with at least one of the claims 4 to 9, wherein the widened sections (56) of the second electrode (112) are longer in the peripheral direction than the reduced sections (58) of the second electrode (112), with the widened sections (56) preferably being 1.5 times as long as the reduced sections (58).

12. A laser scanner in accordance with at least one of the preceding claims, wherein the control unit is configured to generate the signal in such a manner that said signal comprises a first frequency and a second frequency, with the control unit being adapted to transmit the use data by means of the second frequency.

13. A laser scanner in accordance with at least one of the preceding claims, wherein
- a first coil (14) is provided coaxially and rotationally fixedly with respect to the first electrode carrier (10) and
- a second coil (114) is provided coaxially and rotationally fixedly with respect to the second electrode carrier (110) and is disposed opposite and axially spaced apart from the first coil (14) with respect to the axis of rotation (A) such that an energy transmission is possible by an inductive coupling between the two coils (14, 114); and wherein
an arrangement of conductive material (18, 20; 118, 120) for electrical shielding is provided in a radial region between the first coil (14) and the first electrode (12) and/or between the second coil (114) and the second electrode (112), in each case coaxially between the coil (14, 114) and the electrode (12, 112).

14. A method for the contactless transmission of data and for the determination of an angle change between a sensor head which forms a first object and a supply unit of a laser scanner which forms a second object, wherein the two objects move relative to one another about a common axis of rotation (A), with the method comprising the following steps:
- providing a first electrode carrier (10) at the first object, with the first electrode carrier (10) comprising a first electrode (12);
- providing a second electrode carrier (110) at the second object, with the second electrode carrier (110) comprising a second electrode,
with the first and second electrode carriers (10, 110) being disposed opposite and axially spaced apart with respect to the axis of rotation (A) and the first and second electrodes (12, 112) being arranged such that a data transmission is possible by an electrical coupling between the first and second electrodes (12, 112), and with the strength of the electrical coupling fluctuating along the peripheral extent of the first and second electrodes (12, 112);
- transmitting a signal from the first electrode (12) to the second electrode (112); and
- evaluating the signal strength of the received signal separately at at least two sections (56, 58) of the second electrode (112) which are electrically insulated with respect to one another in order to determine an angle change between the first and second objects.

## Revendications

1. Scanneur laser comportant un dispositif pour la transmission de données sans contact et pour la détermination d'un changement angulaire, le scanneur laser comprenant une tête de capteur mobile en rotation autour d'un axe de rotation (A) et constituant un premier objet, et une unité d'alimentation constituant un second objet,
dans lequel
au niveau du dispositif de transmission de données sans contact et de détermination d'un changement angulaire,
- un premier porte-électrode (10) comprenant une première électrode (12) est prévu sur le premier objet,
- un second porte-électrode (110) comprenant une seconde électrode (112) est prévu sur le second objet,
les premier et second porte-électrodes (10, 110) se font face à distance l'un de l'autre axialement par rapport à l'axe de rotation (A), et les première et seconde électrodes (12, 112) sont disposées de telle sorte qu'une transmission de données est possible par couplage électrique entre les première et seconde électrodes (12, 112), l'intensité du couplage électrique variant le long de l'extension périphérique des première et seconde électrodes (12, 112),
il est prévu une unité de commande qui est réalisée pour transmettre un signal de la première électrode (12) à la seconde électrode (112), et
il est prévu une unité d'évaluation (60, 64) qui est réalisée pour déterminer et évaluer une intensité du signal reçu séparément sur au moins deux parties (56, 58) électriquement isolées l'une de l'autre de la seconde électrode (112), afin de déterminer un changement angulaire entre les premier et second objets.

2. Scanneur laser selon la revendication 1,
dans lequel
les porte-électrodes (10, 110) sont réalisés de telle sorte que l'intensité du couplage électrique le long de l'extension périphérique des première et seconde électrodes (12, 112) varie localement, au moins deux des parties (56, 58) ainsi formées présentant une longueur différente.

3. Scanneur laser selon la revendication 1 ou 2,
dans lequel
la forme de l'une au moins des électrodes (12, 112) varie le long de son extension en direction périphérique, et/ou
un diélectrique est déposé sur l'une au moins des électrodes (12, 112), et/ou
il est prévu un blindage, et/ou
l'une au moins des électrodes (12, 112) présente une forme tridimensionnelle pour varier l'intensité du couplage électrique le long de l'extension périphérique des première et seconde électrodes (12, 112).

4. Scanneur laser selon l'une au moins des revendications précédentes, dans lequel
le premier porte-électrode (10) présente des parties (56, 58) alternantes en direction périphérique, pourvues d'une première électrode élargie puis rétrécie, dont au moins deux parties (56, 58) présentent une longueur différente, et le second porte-électrode (110) présente des parties (56, 58) alternantes en direction périphérique, pourvues d'une seconde électrode (112) élargie puis rétrécie.

5. Scanneur laser selon la revendication 4,
dans lequel
une partie (56) ayant une longueur prédéterminée en direction périphérique et pourvue d'une électrode élargie code un un, et une partie (58) ayant la longueur prédéterminée en direction périphérique et pourvue d'une électrode rétrécie code un zéro, la première électrode (12) définissant en direction périphérique une séquence binaire aléatoire ou pseudo-aléatoire.

6. Scanneur laser selon la revendication 5,
dans lequel
la séquence binaire est une séquence m.

7. Scanneur laser selon la revendication 5 ou 6,
dans lequel
la première électrode (12) code 63 ou 127 zéros et uns en direction périphérique, et/ou la seconde électrode (112) code 63 ou 127 zéros et uns en direction périphérique.

8. Scanneur laser selon l'une au moins des revendications 4 à 7,
dans lequel
l'unité d'évaluation (60, 64) est réalisée pour déterminer une intensité du signal reçu séparément sur chaque partie (56) ayant une seconde électrode élargie (112) et/ou séparément sur chaque partie (58) ayant une seconde électrode rétrécie (112).

9. Scanneur laser selon la revendication 8,
dans lequel
l'unité d'évaluation comprend un, de préférence précisément un convertisseur analogique-numérique (64) et un multiplexeur (60), le multiplexeur (60) étant réalisé pour coupler le convertisseur analogique-numérique (64) au choix à l'une des parties (56, 58) de la seconde électrode (112), afin de déterminer l'intensité du signal reçu sur chaque partie (56, 58) de la seconde électrode (112).

10. Scanneur laser selon l'une au moins des revendications 4 à 9,
dans lequel
aussi bien les parties élargies que les parties rétrécies (56, 58) de la seconde électrode (112) présentent la même longueur cumulée en direction périphérique.

11. Scanneur laser selon l'une au moins des revendications 4 à 9,
dans lequel
les parties élargies (56) de la seconde électrode (112) sont réalisées plus longues en direction périphérique que les parties rétrécies (58) de la seconde électrode (112), les parties élargies (56) étant de préférence 1,5 fois plus longues que les parties rétrécies (58).

12. Scanneur laser selon l'une au moins des revendications précédentes, dans lequel
l'unité de commande est réalisée pour générer le signal de telle sorte qu'il présente une première fréquence et une seconde fréquence, l'unité de commande étant conçue pour transmettre les données utiles à l'aide de la seconde fréquence.

13. Scanneur laser selon l'une au moins des revendications précédentes, dans lequel
- une première bobine (14) est prévue coaxialement et solidairement en rotation par rapport au premier porte-électrode (10),
- une seconde bobine (114) est prévue coaxialement et solidairement en rotation par rapport au second porte-électrode (110), qui fait face à la première bobine (14) à distance axialement par rapport à l'axe de rotation (A), de telle sorte qu'une transmission d'énergie par couplage inductif entre les deux bobines (14, 114) est possible,
dans une zone radiale entre la première bobine (14) et la première électrode (12) et/ou entre la seconde bobine (114) et la seconde électrode (112), il est prévu un ensemble respectif en matériau conducteur (18, 20 ; 118, 120) coaxialement entre la bobine (14, 114) et l'électrode (12, 112) pour le blindage électrique.

14. Procédé pour la transmission de données sans contact et pour la détermination d'un changement angulaire entre une tête de capteur constituant un premier objet et une unité d'alimentation constituant un second objet, d'un scanneur laser, les deux objets se déplaçant l'un par rapport à l'autre autour d'un axe de rotation commun (A), le procédé comprenant les étapes suivantes consistant à :
- prévoir un premier porte-électrode (10) sur le premier objet, le premier porte-électrode (10) comprenant une première électrode (12),
- prévoir un second porte-électrode (110) sur le second objet, le second porte-électrode (110) comprenant une seconde électrode,
les premier et second porte-électrodes (10, 110) se faisant face à distance l'un de l'autre axialement par rapport à l'axe de rotation (A), et les première et seconde électrodes (12, 112) étant disposées de telle sorte qu'une transmission de données est possible par couplage électrique entre les première et seconde électrodes (12, 112), l'intensité du couplage électrique variant le long de l'extension périphérique des première et seconde électrodes (12, 112),
- transmettre un signal de la première électrode (12) à la seconde électrode (112), et
- évaluer l'intensité du signal reçu séparément sur au moins deux parties (56, 58) électriquement isolées l'une de l'autre de la seconde électrode (112), afin de déterminer un changement angulaire entre les premier et second objets.
